# EUROPEAN PATENT APPLICATION

(11) **EP 2 495 933 A1**
(43) Date of publication of application: **05.09.2012**
(21) Application number: 10788970.1
(22) Date of filing: 23.06.2010
(51) Int. Cl.: H04L 29/08

(54) **METHOD AND SYSTEM FOR RECOVERING VIDEO MONITORING SERVICE**

(30) Priority: 29.10.2009 CN 200910207174
(71) Applicant: ZTE Corporation, Shenzhen, Guangdong 518057 (CN)
(72) Inventor: FENG, Yanqing, Shenzhen Guangdong 518057 (CN); WANG, Ruiping, Shenzhen Guangdong 518057 (CN); ZHANG, Su, Shenzhen Guangdong 518057 (CN); SUN, Yang, Shenzhen Guangdong 518057 (CN)
(74) Representative: Anderson, Angela Mary
(86) International application number: PCT/CN2010/074317
(87) International publication number: WO 2010/145574

(57) **Abstract**

A method and system for recovering video monitoring service are disclosed in the present invention, which belong to the video monitoring field. The method includes: dividing the fault information of POPs into different types, and formulating video monitoring service recovery measures corresponding to different types of fault information; acquiring the fault information of the current POP; executing the video monitoring service recovery measure corresponding to the fault information according to the type of the fault information. The system includes: a dividing module, an acquiring module and an executing module. The technical scheme provided by the invention can improve fault tolerance and stability of the system.

## Description

### Technical Field

The present invention relates to the field of video monitoring, and in particular, to a method and system for recovering a video monitoring service.

### Background Art

Network video monitoring service is a value-added service of monitoring, transmitting, storing and managing remote images based on a broadband network. This service networks dispersed and separate image collecting points by utilizing a broadband network to achieve cross-region and omni-scope uniform monitoring, uniform storage, uniform management and resource sharing.

A network video monitoring system can satisfy both common monitoring requirements and professional monitoring requirements, networking is performed separately, and the video monitoring service can be implemented on both a mobile streaming media and an interactive Internet Protocol Television (IPTV).

During the process of the network video monitoring system being used in commerce, there appears the system fault of service interruption caused by saturation of the capability of the access point and abnormality of the Point Of Present (POP) due to the increasing large scale of the application of the system. Although the service operation can be recovered by extending the serving capability of the POP or manually switching the POP, it is impossible to avoid this fault in advance because of the indeterminacy of presence of such abnormality; moreover, once such abnormality occurs, the result will be rather severe, for example, for the monitoring of some special industrials or some sensitive monitoring points, the interruption of monitoring service or cease of recording is not allowed.

With the rapid development of the monitoring service and higher requirements of the users' on the monitoring, how to avoid service interruption caused by saturation of the capability of the access point and abnormality of the POP has become an important issue that needs to be solved in the field of video monitoring technology.

### Summary of the Invention

The problem to be solved in the examples of the present invention is to provide a method and system for recovering a video monitoring service to solve the problem of instability of the system caused by service interruption in the prior art.

In order to solve the above problem, the examples of the present invention provide a method and system for recovering a video monitoring service, and the specific technical schemes are as follows.

A method for recovering a video monitoring service, comprising the following steps of:
dividing fault information of points of present (POPs) into different types, and formulating video monitoring service recovery measures corresponding to different types of fault information;
acquiring the fault information of a current POP; and
executing the video monitoring service recovery measure corresponding to the fault information according to the type of the fault information.

Wherein, the step of acquiring the fault information of the current POP comprises:
receiving access information reported by a client unit, wherein the access information comprises an access number of the client unit; and
comparing the access number of the client unit with a preset access number threshold to determine whether the access number of the client unit is larger than the preset access number threshold; if yes, determining that serving capability to the client unit is saturated, and taking information that the serving capability to the client unit is saturated as the fault information of the current POP;
the step of executing the video monitoring service recovery measure corresponding to the fault information according to the type of the fault information comprises:
   switching the client unit from the current POP to a standby POP according to the information that the serving capability to the client unit is saturated.

Wherein, the step of acquiring the fault information of a current POP comprises:
receiving access information reported by a pre-unit, wherein the access information comprises an access number of the pre-unit, comparing the access number of the pre-unit with a preset access number threshold to determine whether the access number of the pre-unit is larger than the preset access number threshold, if yes, determining that serving capability to the pre-unit is saturated, and taking information that the serving capability to the pre-unit is saturated as the fault information of the current POP; and/or
receiving access information reported by the pre-unit, wherein the access information comprises a disk array space occupied by the pre-unit, comparing the occupied disk array space with a remaining disk array space of the current POP to determine whether the occupied disk array space is larger than the remaining disk array space of the current POP, if yes, determining that serving capability to the pre-unit is saturated, and taking information that the serving capability to the pre-unit is saturated as the fault information of the current POP;
the step of executing the video monitoring service recovery measure corresponding to the fault information according to the type of the fault information comprises:
   switching the pre-unit from the current POP to the standby POP according to the information that the serving capability to the pre-unit is saturated.

Wherein, the type of the fault information is information of abnormality of the disk array space reported by the current POP or acquired by initiative monitoring;
the step of executing the video monitoring service recovery measure corresponding to the fault information according to the type of the fault information comprises:
switching the pre-unit of the current POP from the current POP to the standby POP according to the information of abnormality of the disk array space.
Wherein, the type of the fault information is information of abnormality of the current POP reported by the current POP or acquired by initiative monitoring;
the step of executing the video monitoring service recovery measure corresponding to the fault information according to the type of the fault information comprises:
switching the pre-unit and the client unit of the current POP from the current POP to the standby POP according to the information of abnormality of the current POP.

Wherein, the type of the acquired fault information is information of saturation of the serving capability of the current POP reported by the current POP or acquired by initiative monitoring;
the step of executing the video monitoring service recovery measure corresponding to the fault information according to the type of the fault information comprises:
switching the overloaded pre-unit and the client unit of the current POP from the current POP to the standby POP according to the information of saturation of the serving capability of the current POP.

Wherein, the step of executing the video monitoring service recovery measure corresponding to the fault information further comprises:
switching the video monitoring service from the current POP to a standby POP according to a descending order of priorities of standby POPs;
switching the video monitoring service from the current POP to a relatively idle standby POP according to a load balance policy when the priorities of the standby POPs are the same.

The above method further comprises: informing a user of information of executing the video monitoring service recovery measure.

A system for recovering a video monitoring service, comprising:
a dividing module, which is configured to divide fault information of points of present (POPs) into different types, and formulate video monitoring service recovery measures corresponding to different types of fault information;
an acquiring module, which is configured to acquire the fault information of a current POP; and
an executing module, which is configured to execute the video monitoring service recovery measure corresponding to the fault information according to the type of the fault information.

Wherein, the type of the fault information is information of abnormality of a disk array space reported by the current POP or acquired by initiative monitoring;
the executing module is configured to switch a pre-unit of the current POP from the current POP to a standby POP according to the information of abnormality of the disk array space.

Wherein, the type of the fault information is information of abnormality of the current POP reported by the current POP or acquired by initiative monitoring;
the executing module is configured to switch the pre-unit and a client unit of the current POP from the current POP to the standby POP according to the information of abnormality of the current POP.

Wherein, the type of the acquired fault information is information of saturation of the serving capability of the current POP reported by the current POP or acquired by initiative monitoring;
the executing module is configured to switch the overloaded pre-unit and the client unit of the current POP from the current POP to the standby POP according to the information of saturation of the serving capability of the current POP.

Wherein, the executing module is configured to execute the video monitoring service recovery measure corresponding to the fault information in the following way: switching the video monitoring service from the current POP to a standby POP according to a descending order of priorities of standby POPs; switching the video monitoring service from the current POP to a relatively idle standby POP according to a load balance policy when the priorities of the standby POPs are the same.

The above system further comprises an informing module, which is configured to inform a user of execution information of the executing module.

In the examples of the present invention, by dividing fault information of points of present (POPs) into different types, and formulating corresponding video monitoring service recovery measures for different types of fault information, acquiring the fault information of a current POP, and executing the video monitoring service recovery measure corresponding to the fault information according to the type of the fault information, the problem of interruption of video monitoring service in the prior art can be solved, the various indeterminacies caused by manual switching are avoided, the capability of the POP can be fully used, and the video monitoring service can be recovered in time and efficiently, thus improving the stability and fault tolerance of the system.

### Brief Description of Drawings

FIG. 1 is the flowchart of a method for recovering a video monitoring service provided by an example of the present invention.
FIG. 2 illustrates the structure of a system for recovering a video monitoring service provided by an example of the present invention.
FIG. 3 is the detailed flowchart of a method for recovering a video monitoring service provided by an example of the present invention.
FIG. 4 illustrates the composition of a POP provided by an example of the present invention.
FIG. 5 illustrates the dependency relationship between POPs provided by an example of the present invention.
FIG. 6 illustrates the switching of POP provided by an example of the present invention.

### Preferred Embodiments of the Present Invention

The core conception of the present invention is that by dividing fault information of points of present (POPs) into different types, and formulating corresponding video monitoring service recovery measures for different types of fault information, acquiring the fault information of a current POP, and executing the video monitoring service recovery measure corresponding to the fault information according to the type of the fault information, the problem of interruption of video monitoring service in the prior art can be solved, the various indeterminacies caused by manual switching are avoided, the capability of the POP can be fully used, and the video monitoring service can be recovered in time and efficiently so that the system can operate uninterruptedly for 24 hours per day, thus improving the stability and fault tolerance of the system.

The technical scheme of the present invention will be described in detail below with reference to the drawings and the preferred embodiments.

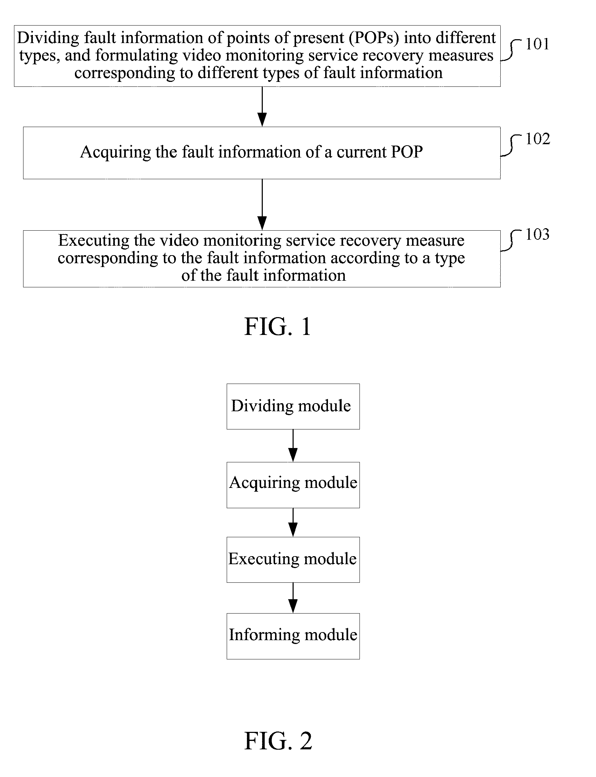

An example of the present invention provides a method for recovering a video monitoring service, as shown in FIG. 1, comprising:
101, dividing fault information of points of present (POPs) into different types, and formulating video monitoring service recovery measures corresponding to different types of fault information;102, acquiring the fault information of a current POP; and
103, executing the video monitoring service recovery measure corresponding to the fault information according to a type of the fault information.

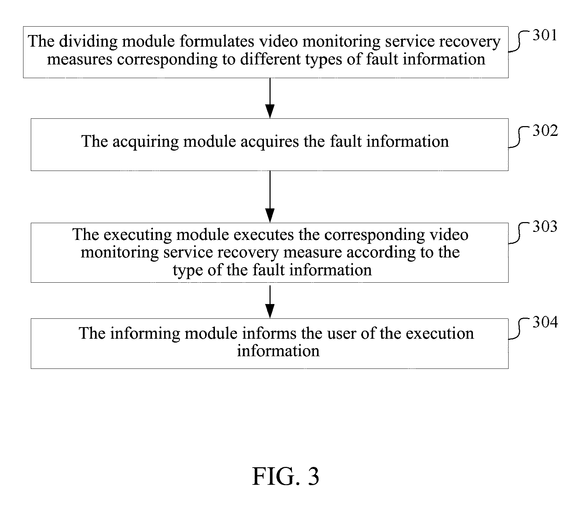

The present invention will be described in detail below with reference to a specific example, which however does not constitute a limitation to the protection scope of the present invention. This example provides a system for recovering a video monitoring service, as shown in FIG. 2, comprising: a dividing module, an acquiring module, a switching module and an informing module. In conjunction with FIG. 2, the method for recovering a video monitoring service provided in this example, as shown in FIG. 3, comprises the following steps.

In 301, the dividing module divides fault information of points of present (POPs) into different types, and formulates video monitoring service recovery measures corresponding to different types of fault information.

Specifically, the dividing module divides the fault information of the POP into saturation of serving capability to Client Unit (CU), saturation of serving capability to Pre-Unit (PU), POP disk array space abnormality, POP abnormality, and saturation of serving capability of POP, etc.

Wherein, the video monitoring service recovery measure formulated for the fault type of saturation of serving capability to CU may be switching the CU from the current POP to a standby POP.

The video monitoring service recovery measure formulated for the fault type of saturation of serving capability to PU may be switching the PU from the current POP to a standby POP. Wherein, saturation of serving capability to PU comprises: disk array space being full and/or the access number of the PU is greater than the preset maximum access number of the POP.

The video monitoring service recovery measure formulated for the fault type of POP disk array space abnormality may be switching the PU of the current POP from the current POP to a standby POP.

The video monitoring service recovery measure formulated for the fault type of POP abnormality may be switching the PU and the CU of the current POP from the current POP to a standby POP.

The video monitoring service recovery measure formulated for the fault type of saturation of serving capability of the POP may be switching the overloaded PU and CU of the current POP from the current POP to a standby POP.

In 302, the acquiring module acquires the fault information of a POP.

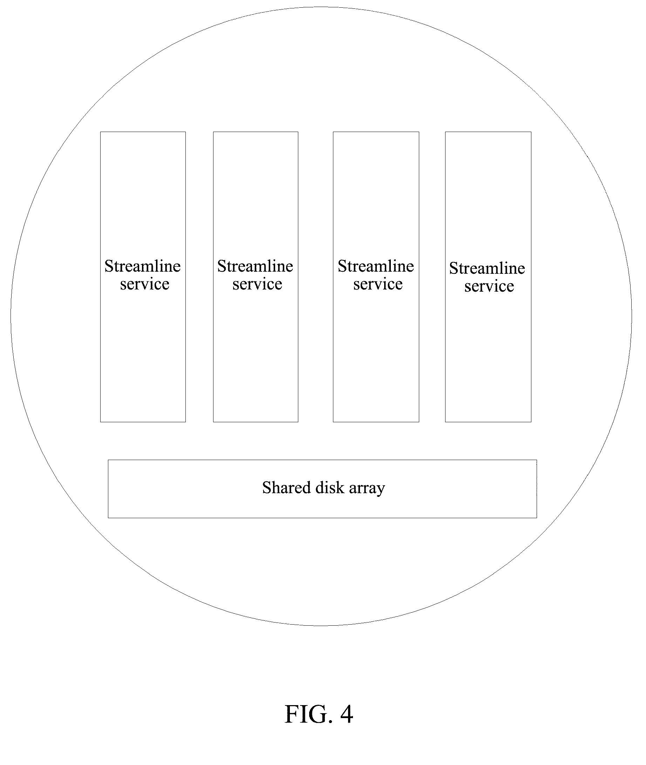

Wherein, the POP in this example is a logical unit mainly consisting of four Streamline Services and one shared disk array, as seen in FIG. 4. It should be pointed out that the POP can also consist of three Streamline Services and two shared disk arrays, and this example is not limited thereto.

Specifically, the maximum access number of the PU, the maximum access number of the CU, the disk array space and the like are preset in the POP.

Wherein, the access information reported by the CU is received, and the access information comprises: the access number of the CU. The system compares the access number of the CU with the preset maximum access number of the CN to determine whether the access number of the CU is greater than the preset maximum access number of the CN, and if yes, determines that the serving capability of the POP to the CU is saturated, and takes the information that serving capability to the CU is saturated as the fault information of the current POP.

The access information reported by the PU is received, and the access information comprises: the access number of the PU. The system compares the access number of the PU with the preset maximum access number of the PN to determine whether the access number of the PU is greater than the preset maximum access number of the PN, and if yes, determines that serving capability of the POP to the PU is saturated, and takes the information that serving capability to the PU is saturated as the fault information of the current POP.

The access information reported by the PU is received, and the access information comprises: the disk array space occupied by the PU. The system compares the disk array space occupied by the PU with the remaining disk array space of the current POP to determine whether the disk array space occupied by the PU is greater than the remaining disk array space of the current POP, and if yes, determines that the serving capability of the PU is saturated, and takes the information that serving capability of the PU is saturated as the fault information of the current POP.

The information of disk array space abnormality reported by the current POP or acquired by initiative monitoring is received, and the information of disk array space abnormality is taken as the fault information of the current POP.

The information of abnormality of the current POP reported by the current POP or acquired by initiative monitoring is received, and the information of abnormality of the current POP is taken as the fault information of the current POP. For example, when a proxy server of the POP has a fault, the information of the proxy server having a fault is reported to the system as the abnormality information of the POP.

The information that serving capability of the current POP is saturated reported by the current POP or acquired by initiative monitoring is received, and the information that serving capability of the current POP is saturated is taken as the fault information of the current POP. For example, when the current POP has a streamline service fault during its operation, the current POP reports the streamline service fault as the information that the capability of the current POP is saturated to the system.

In 303, the executing module executes the corresponding video monitoring service recovery measure according to the type of the fault information.

Specifically, if the type of the fault information is that serving capability to the CU is saturated, the executing module switches the CU from the current POP to the standby POP.

If the type of the fault information is that serving capability to the PU is saturated, the executing module switches the PU from the current POP to the standby POP.

If the type of the fault information is disk array space abnormality of the POP, the executing module switches the PU of the current POP from the current POP to the standby POP.

If the type of the fault information is abnormality of the POP, the executing module switches the PU and the CU of the current POP from the current POP to the standby POP.

If the type of the fault information is that serving capability of the POP is saturated, the executing module switches the overloaded PU and CU of the current POP from the current POP to the standby POP.

Wherein, switching from the current POP to the standby POP is to switch the video monitoring service from the current POP to the standby POP according to a descending order of priorities of standby POPs; when the priorities of the standby POPs are the same, the video monitoring service is switched from the current POP to a relatively idle standby POP according to a load balance policy.

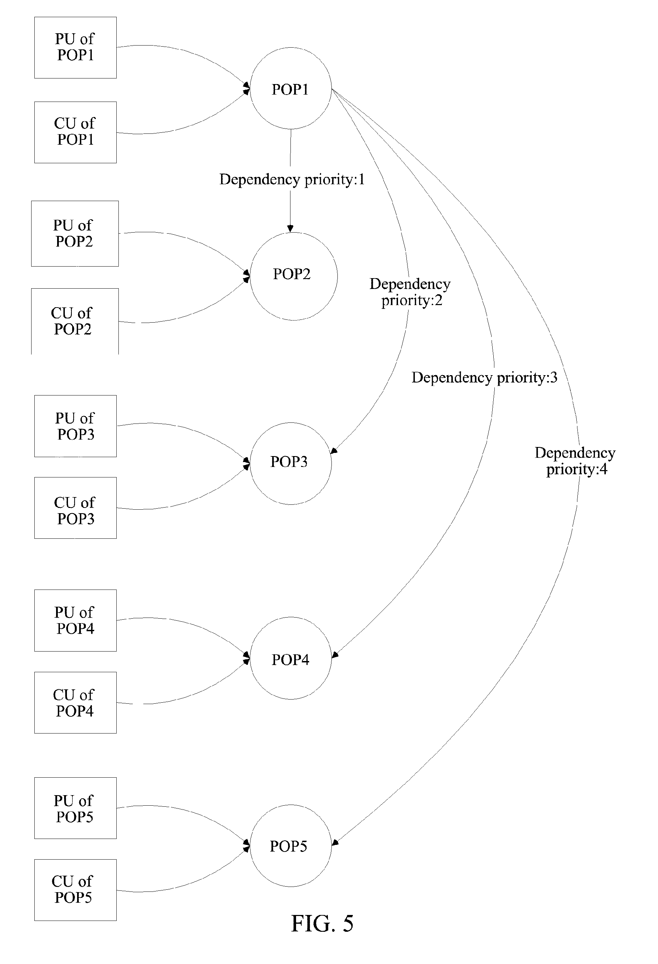

Specifically, switching between POPs depends on the dependency relationship between POPs pre-established by the system, as shown in FIG. 5, which illustrates the dependency relationship established for the POPs, where a dependency relationship is established between each POP and other POPs, and priorities are set. For example, the priorities of the units can be determined according to a proximity principle of the POPs, and when the service needs to be recovered through switching, the service is automatically switched to a POP having a higher priority, and when the priorities are the same, the service is automatically switched to a relatively idle POP according to a load balance policy. Specifically, as illustrated in FIG. 5, when the PU and CU of POP 1 need to access to other POPs due to a fault of the POP1, the POP 5 having a priority of 4 will be selected.

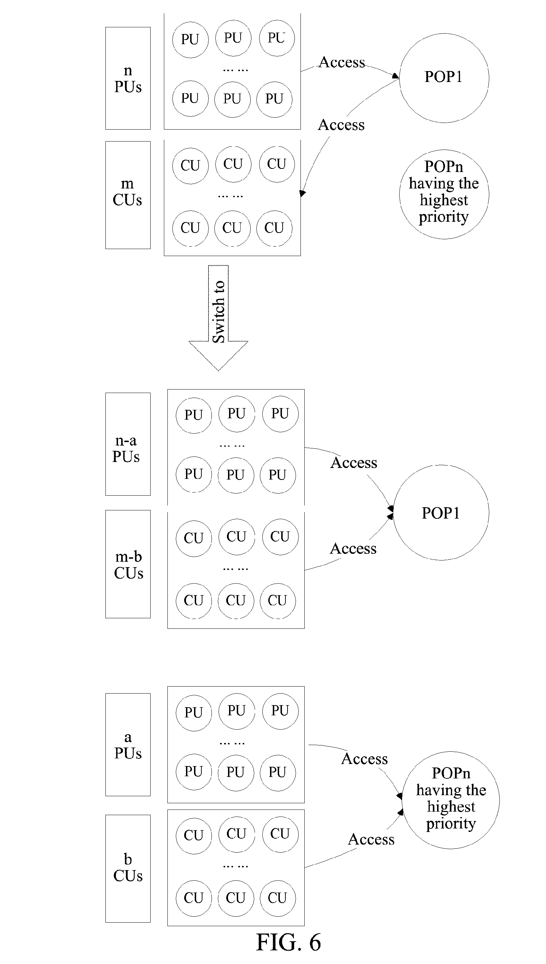

As shown in FIG. 6, it illustrates a POP switching and mainly describes a scene in which a PUs and b CUs among n PUs and m CUs of POP1 are switched to POPn, where n>=a, m>=b, m, n, a and b are non-zero natural numbers.

In 304, after the executing module finishes execution, the informing module is triggered to inform the user of the execution information.

Specifically, the informing module informs the user of an alarm that switching needs to be performed manually or a record of automatic switching, for example, the reason of switching of the POP, switching trace, switching object, and the like.

Based on the same inventive conception as the method, an example of the present invention provides a system for recovering a video monitoring service, as shown in FIG. 2, the system comprising:
a dividing module, which is used to divide fault information of points of present (POPs) into different types, and formulate video monitoring service recovery measures corresponding to different types of fault information;
an acquiring module, which is used to acquire the fault information of a current POP; and
an executing module, which is used to execute the video monitoring service recovery measure corresponding to the fault information according to the type of the fault information.

Furthermore,
the acquiring module is specifically used to receive the access information reported by a CU, where the access information includes the access number of the CU; compare the access number of the CU with a preset access number threshold to determine whether the access number of the CU is greater than the preset access number threshold; if yes, determine that the serving capability to the CU is saturated, and take the information that the serving capability to the CU is saturated as the fault information of the current POP; correspondingly, the executing module is used to switch the CU from the current POP to a standby POP according to the information that the serving capability to the CU is saturated.

Furthermore,
the acquiring module is specifically used to receive the access information reported by a PU, where the access information includes the access number of the PU, compare the access number of the PU with a preset access number threshold to determine whether the access number of the PU is greater than the preset access number threshold, and if yes, determine that the serving capability to the PU is saturated, and take the information that the serving capability to the PU is saturated as the fault information of the current POP; and/or
receive the access information reported by a PU, where the access information includes the disk array space occupied by the PU, compare the disk array space occupied by the PU with the remaining disk array space of the current POP to determine whether the disk array space occupied by the PU is greater than the remaining disk array space of the current POP, and if yes, determine that the serving capability of the PU is saturated, and take the information that the serving capability of the PU is saturated as the fault information of the current POP;
correspondingly, the executing module is used to switch the PU from the current POP to a standby POP according to the information that the serving capability of the PU is saturated.

Furthermore,
the type of the fault information acquired by the acquiring module is information of disk array space abnormality reported by the current POP or acquired by initiative monitoring;
correspondingly, the executing module is specifically used to switch the PU of the current POP from the current POP to the standby POP according to the information of disk array space abnormality.

Furthermore, the type of the fault information acquired by the acquiring module is information of abnormality of the current POP reported by the current POP or acquired by initiative monitoring;
correspondingly, the executing module is specifically used to switch the PU and CU of the current POP from the current POP to the standby POP according to the information of abnormality of the current POP.

Furthermore,
the type of the fault information acquired by the acquiring module is information that the serving capability of the current POP is saturated reported by the current POP or acquired by initiative monitoring;
correspondingly, the executing module is specifically used to switch the overloaded PU and CU of the current POP from the current POP to the standby POP according to the information that the serving capability of the current POP is saturated.

Furthermore, the executing module is specifically used to switch the video monitoring service from the current POP to the standby POP according to the type of the fault information and the descending order of priorities of standby POPs;
when the priorities of the standby POPs are the same, switch the video monitoring service from the current POP to a relatively idle standby POP according to a load balance policy.

Furthermore, the system further comprise: an informing module, which is used to inform the user of the execution information of the executing module.

In the examples of the present invention, by dividing fault information of points of present (POPs) into different types, and formulating corresponding video monitoring service recovery measures for different types of fault information, acquiring the fault information of a current POP, and executing the video monitoring service recovery measure corresponding to the fault information according to the type of the fault information, the problem of interruption of video monitoring service in the prior art can be solved, the various indeterminacies caused by manual switching are avoided, the capability of the POP can be fully used, and the video monitoring service can be recovered in time and efficiently so that the system can operate uninterruptedly for 24 hours per day, thus improving the stability and fault tolerance of the system.

The above description illustrates and describes a preferred example of the present invention, and as described above, it shall be appreciated that the present invention is not limited to the form disclosed in this text, and shall not be construed as an exclusion from other examples, but can be applied to other various combinations, modifications and environments, and can be modified within the scope of the conception as described in the present invention through the above teaching or technology or knowledge in the related field. However, the modifications and changes made by a person having ordinary skill in the art, without departing from the spirit and scope of the present invention, shall all fall into the protection scope of the attached claims of the present invention.

Those skilled in the art shall understand that all of or part of the steps in the above methods can be completed by instructing relevant hardware by programs, and the programs can be stored in a computer readable storage medium, such as a read only memory, a magnetic disk, or an optical disk, etc. Optionally, all of or part of the steps of the above embodiments can also be implemented using one or more integrated circuits. Accordingly, the modules/units in the above embodiments can be implemented in the form of hardware and can also be implemented in the form of software function modules. The present invention is not limited to any particular form of combination of hardware and software.

### Industrial Applicability

In the present invention, by dividing fault information of points of present (POPs) into different types, and formulating corresponding video monitoring service recovery measures for different types of fault information, acquiring the fault information of a current POP, and executing the video monitoring service recovery measure corresponding to the fault information according to the type of the fault information, the problem of interruption of video monitoring service in the prior art can be solved, the various indeterminacies caused by manual switching are avoided, the capability of the POP can be fully used, and the video monitoring service can be recovered in time and efficiently, thus improving the stability and fault tolerance of the system.

## Claims

1. A method for recovering a video monitoring service, comprising the following steps of:
dividing fault information of points of present (POPs) into different types, and formulating video monitoring service recovery measures corresponding to different types of fault information;
acquiring the fault information of a current POP; and
executing the video monitoring service recovery measure corresponding to the fault information according to the type of the fault information.

2. The method according to claim 1, wherein, the step of acquiring the fault information of the current POP comprises:
receiving access information reported by a client unit, wherein the access information comprises an access number of the client unit; and
comparing the access number of the client unit with a preset access number threshold to determine whether the access number of the client unit is larger than the preset access number threshold; if yes, determining that serving capability to the client unit is saturated, and taking information that the serving capability to the client unit is saturated as the fault information of the current POP;
the step of executing the video monitoring service recovery measure corresponding to the fault information according to the type of the fault information comprises:
switching the client unit from the current POP to a standby POP according to the information that the serving capability to the client unit is saturated.

3. The method according to claim 1, wherein, the step of acquiring the fault information of a current POP comprises:
receiving access information reported by a pre-unit, wherein the access information comprises an access number of the pre-unit, comparing the access number of the pre-unit with a preset access number threshold to determine whether the access number of the pre-unit is larger than the preset access number threshold, if yes, determining that serving capability to the pre-unit is saturated, and taking information that the serving capability to the pre-unit is saturated as the fault information of the current POP; and/or
receiving access information reported by the pre-unit, wherein the access information comprises a disk array space occupied by the pre-unit, comparing the occupied disk array space with a remaining disk array space of the current POP to determine whether the occupied disk array space is larger than the remaining disk array space of the current POP, if yes, determining that serving capability to the pre-unit is saturated, and taking information that the serving capability to the pre-unit is saturated as the fault information of the current POP;
the step of executing the video monitoring service recovery measure corresponding to the fault information according to the type of the fault information comprises:
switching the pre-unit from the current POP to the standby POP according to the information that the serving capability to the pre-unit is saturated.

4. The method according to claim 1, wherein, the type of the fault information is information of abnormality of the disk array space reported by the current POP or acquired by initiative monitoring;
the step of executing the video monitoring service recovery measure corresponding to the fault information according to the type of the fault information comprises:
switching the pre-unit of the current POP from the current POP to the standby POP according to the information of abnormality of the disk array space.

5. The method according to claim 1, wherein, the type of the fault information is information of abnormality of the current POP reported by the current POP or acquired by initiative monitoring;
the step of executing the video monitoring service recovery measure corresponding to the fault information according to the type of the fault information comprises:
switching the pre-unit and the client unit of the current POP from the current POP to the standby POP according to the information of abnormality of the current POP.

6. The method according to claim 1, wherein, the type of the acquired fault information is information of saturation of the serving capability of the current POP reported by the current POP or acquired by initiative monitoring;
the step of executing the video monitoring service recovery measure corresponding to the fault information according to the type of the fault information comprises:
switching the overloaded pre-unit and the client unit of the current POP from the current POP to the standby POP according to the information of saturation of the serving capability of the current POP.

7. The method according to any one of claims 1 to 6, wherein, the step of executing the video monitoring service recovery measure corresponding to the fault information further comprises:
switching the video monitoring service from the current POP to a standby POP according to a descending order of priorities of standby POPs;
switching the video monitoring service from the current POP to a relatively idle standby POP according to a load balance policy when the priorities of the standby POPs are the same.

8. The method according to any one of claims 1 to 6, further comprising: informing a user of information of executing the video monitoring service recovery measure.

9. A system for recovering a video monitoring service, comprising:
a dividing module, which is configured to divide fault information of points of present (POPs) into different types, and formulate video monitoring service recovery measures corresponding to different types of fault information;
an acquiring module, which is configured to acquire the fault information of a current POP; and
an executing module, which is configured to execute the video monitoring service recovery measure corresponding to the fault information according to the type of the fault information.

10. The system according to claim 9, wherein, the type of the fault information is information of abnormality of a disk array space reported by the current POP or acquired by initiative monitoring;
the executing module is configured to switch a pre-unit of the current POP from the current POP to a standby POP according to the information of abnormality of the disk array space.

11. The system according to claim 9, wherein, the type of the fault information is information of abnormality of the current POP reported by the current POP or acquired by initiative monitoring;
the executing module is configured to switch the pre-unit and a client unit of the current POP from the current POP to the standby POP according to the information of abnormality of the current POP.

12. The system according to claim 9, wherein, the type of the acquired fault information is information of saturation of the serving capability of the current POP reported by the current POP or acquired by initiative monitoring;
the executing module is configured to switch the overloaded pre-unit and the client unit of the current POP from the current POP to the standby POP according to the information of saturation of the serving capability of the current POP.

13. The system according to claim 9, wherein, the executing module is configured to execute the video monitoring service recovery measure corresponding to the fault information in the following way: switching the video monitoring service from the current POP to a standby POP according to a descending order of priorities of standby POPs; switching the video monitoring service from the current POP to a relatively idle standby POP according to a load balance policy when the priorities of the standby POPs are the same.

14. The system according to claims 9 to 13, further comprising an informing module, which is configured to inform a user of execution information of the executing module.
